# EUROPÄISCHE PATENTSCHRIFT

(11) **EP 3 037 700 B1**
(45) Veröffentlichungstag und Bekanntmachung des Hinweises auf die Patenterteilung: **11.09.2019**
(21) Anmeldenummer: 16000073.3
(22) Anmeldetag: 05.06.2012
(51) Int. Cl.: F16K 11/087

(54) **VERFAHREN ZUM BEFÜLLEN ODER ENTNEHMEN VON HEIZUNGSMEDIUM**
METHOD FOR FILLING OR REMOVAL OF HEATING MEDIUM
PROCEDE DE REMPLISSAGE OU DE VIDANGE D'UN CIRCUIT DE CHAUFFAGE

(43) Veröffentlichungstag der Anmeldung: 29.06.2016
(62) Teilanmeldung aus: 12004294.0
(73) Patentinhaber: Delta Systemtechnik GmbH, 29227 Celle (DE)
(72) Erfinder: Geck, Thomas, 30559 Hannover (DE)
(74) Vertreter: Farago-Schauer, Peter Andreas

(56) Entgegenhaltungen:
- EP-A1- 0 566 920
- WO-A1-2012/067604
- DE-A1- 3 104 355
- FR-A- 1 296 093
- US-A- 3 450 151
- US-A- 5 551 467

## Beschreibung

Die Erfindung betrifft ein Verfahren zum Befüllen oder Entnehmen von Heizungsmedium Kugelhähne dienen zum Sperren und Öffnen des Durchflusses von flüssigen oder gasförmigen Medien in Rohrleitungen.

Eine Sperrung ist u. a. dann erforderlich, wenn ein Rohrleitungsabschnitt von einer unter Mediumdruck stehenden Rohrleitung getrennt werden muss, um z. B. in diesem Rohrleitungsabschnitt gelegene Aggregate austauschen zu können. Dazu werden an einem oder beiden Enden des Rohrleitungsabschnitts angeordnete Kugelhähne geschlossen. Der getrennte Rohrleitungsabschnitt muss anschließend druckentlastet und ggf. das noch in ihm befindliche Medium kontrolliert entleert werden. Hierzu ist es bekannt im druckzuentlastenden und zu entleerenden Rohrleitungsabschnitt noch einen weiteren Kugelhahn oder ein Ventil mit einer Entleerungsöffnung anzuordnen. Diese Lösung erfordert eine zusätzliche Armatur und einen dadurch bedingten Platzbedarf und ist in kompakten Anlagen nachteilig.

Ein Kugelhahn ist beispielsweise aus der EP 2 169 286 A2 bekannt. Dort ist eine Hohlspindel vorgesehen, von deren Hohlraum aus sich eine Kammer in eine Stellkammer des Kugelhahns erstreckt. In der Hohlspindel ist ein Sensor angeordnet, der sich mit einem Messteil in der Kammer befindet. Die Kammer kann eine Öffnung zur Stellkammer aufweisen, wenn es sich bei dem Sensor um einen Drucksensor handelt. In jedem Falle ist der Sensor in der Hohlspindel eingegossen, damit keine Öffnung der Kammer zur Umgebung hergestellt wird und das durch den Kugelhahn geführte Medium nicht nach außen entweichen kann.

Die nachveröffentlichte DE 10 2011 013 097 A1 zeigt einen Kugelhahn und ein Verfahren zum Entleeren und Befüllen einer Heizungsanlage mit einem solchen Kugelhahn. Dokument EP0566920 betrifft eine Sicherheitsgruppe zur Absicherung von Trinkwassererwärmern, enthaltend ein als Kükenventil mit einem geraden Durchgangskanal ausgebildetes Absperrventil und einem stromab von diesem angeordneten Rückflußverhinderer, bei welcher ein durch ein Abschlußglied abgeschlossener Prüfkanal vorgesehen ist, der bei geschlossenem Kükenventil mit dem Raum stromauf von dem Rückflußverhinderer in Verbindung steht.

Der Erfindung liegt die Aufgabe zugrunde, den Stand der Technik zu verbessern oder ihm eine gute Alternative zur Verfügung zu stellen.

Diese Aufgabe löst ein Verfahren nach einem der Patentansprüchen 1, 2 oder 3. Die abhängigen Ansprüche beinhalten beispielhafte optionale Weiterbildungen.

Generell sei erwähnt, dass im Rahmen dieser Patentanmeldung unter dem Begriff des Steuerns auch als Option die speziellere Ausführung des Regelns enthalten sein soll. Außerdem sei darauf hingewiesen, dass ein unbestimmter Ausdruck "ein", "zwei" usw. immer im Sinne einer "mindestens, aber insbesondere"-Angabe zu verstehen sein soll, also "mindestens ein, insbesondere genau ein" usw., sofern sich nicht im Einzelfall aus dem Kontext ergibt, dass dort etwa nur "genau ein" usw. gemeint sein soll.

Die den Vorrichtungs-Patentansprüchen beschriebene Ausführung ist bevorzugt DVGWkonform ausgeführt und für einen Einsatz im Trinkwasser geeignet.

Der Betätiger kann vor allem als Welle ausgebildet sein, wobei eine solche Welle gut von einem Griff angetrieben sein kann.

Meist ist eine solche Welle rechtwinklig oder zum Beispiel unter einen Winkel von 45 ° zu einer Durchflussrichtung von Zuleitung zu Ableitung angeordnet.

Das Stellelement ist üblicherweise eine Kugel oder eine Teilkugel mit sphärischer Außenform. Sie kann in einem sphärischen Hohlraum im Kugelhahn gelagert sein, in welchen die Zu- und die Ableitung mit vollem Querschnitt münden.

Die nachveröffentlichte deutsche nationale Patentanmeldung 10 2011 013 097.7 offenbart einen Kugelhahn mit einem Zugriffskanal. Es ist dort aber nicht davon die Rede, dass das Gewinde aus Metall gefertigt sein soll. Dies ist auch keine technisch zwingende Ausführungsform. Hier vorliegend wird demgegenüber eine metallene Ausführungsform beansprucht.

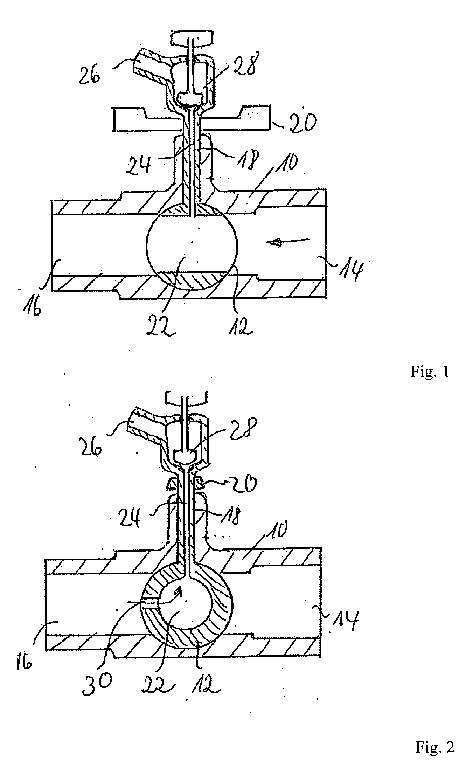

Nachstehend wird die Erfindung anhand zweier Ausführungsbespiele unter Bezugnahme auf die Zeichnung näher erläutert. Es zeigen
- Fig. 1: einen Schnitt durch einen Kugelhahn im geöffneten Zustand,
- Fig. 2: einen Schnitt durch einen Kugelhahn im geschlossenen Zustand und
- Fig .3: stark vereinfacht einen Schnitt durch eine zweite Ausführungsform eines Kugelhahns, mit einer Gewindebohrung in einem Gehäusestutzen.

Der Kugelhahn besteht in üblicher Weise aus einem Gehäuse 10, einem Kücken 12 mit einem Durchflussraum 22, einem mit dem Kücken 12 verbundenen Betätigungsschaft 18 und einem Betätigungsgriff 20 und besitzt einen Zulauf 14 und einen Ablauf 16. Zusätzlich weist der Betätigungsschaft 18 für das Küken 12 eine durchgehende Axialbohrung 24 auf, die in den Durchflussraum 22 des Kückens 12 führt. Auf dem Betätigungsschaft 18 ist eine Entleerungsöffnung 26 angeordnet, die mittels eines Entleerungsventils 28 oder Entleerungshahns öffne und schließbar ist. Das Kücken 12 weist ferner eine Öffnung 30 auf, die im geschlossenen Zustand des Kückens 12 in der Wandung zwischen dessen Durchtrittsraum 22 und dem Ablauf angeordnet 16 ist.

Im normalen Betrieb ist das Entleerungsventil 28 geschlossen. Der Kugelhahn kann in üblicher Weise durch eine 90° Drehung des Betätigungsgriffs 20 vom geöffneten in den geschlossenen Zustand und umgekehrt überführt werden. Dabei wird über den Betätigungsschaft 18 das Kücken im Gehäuse 10 gedreht. In der geöffneten Stellung des Kükens 12 liegen die Öffnungen des Durchflussraumes 22 in Flucht mit dem Zulauf 14 und Ablauf 16, sodass Medium das Küken 12 durchströmen kann. In der geschlossenen Stellung des Kükens 12 liegen die Öffnungen des Durchflussraumes 22 quer zum Zulauf 14 und Ablauf 16 und die Wandungen des Kükens sperren die Verbindung zwischen Zulauf 14 und Ablauf 16.

Durch die zusätzliche Öffnung 30 im Küken 12, die im geschlossenen Zustand des Kückens zwischen dessen Durchtrittsraum 22 und dem Ablauf 16 liegt und die Bohrung 24 im Betätigungsschaft 18 ist auch im geschlossenen Zustand des Kückens 12 eine Verbindung zwischen dem Ablauf 16 und der Bohrung 24 im Betätigungsschaft 18 vorhanden oder kann hergestellt werden. Durch Öffnen des Entleerungsventils 28 kann so der hinter dem Ablauf 16 befindliche Rohrabschnitt entleert werden.

Das Entleerungsventil 28 kann auf das freie Ende des Betätigungsschaftes 18 vor der Entleerungsöffnung 26 aufgesetzt sein. Alternativ kann im Küken 12 auch ein weiteres Kücken zur Bildung eines Entleerungshahns angeordnet sein. Durch das zusätzliche Küken wird dabei die zusätzliche Öffnung im Hauptküken 12 geöffnet oder geschlossen.

Im Rahmen der hier vorliegenden Anmeldung dient das Kücken 12 als Stellelement, wobei in dessen sphärischer Form der Durchflussraum 22 den Stellkanal verkörpert. Der Betätigungsschaft 18 verkörpert den Betätiger. Das Gewinde ist nicht dargestellt, lässt sich aber als Außengewinde am Stutzen des Gehäuses leicht vorstellen.

Um eine reine Metall-auf-Metall-Lagerung zu vermeiden, ist in der Lagerung des Stellelements eine Metall-Kunststoff-Gleitlagerung oder eine Kunststoff-Kunststoff-Gleitlagerung vorgesehen. Beispielsweise kann das Stellelement vollständig aus einer Kunststoffkugel gefertigt sein und in dem metallenen Gehäuse des Kugelhahns drehbar gelagert sein.

Weiterhin ist es auch möglich die Bohrung 24 im Betätigungsschaft 18 zur Durchführung einer Messleitung zu nutzen, die 10 einen im Durchflussraum 22 des Kükens 12 angeordneten Sensor zur Erfassung von Medienparametern mit einem externen Erfassungsgerät verbindet. Der Vorteil dieser Lösung besteht darin, dass die Messleitungen an derselben Stelle aus dem Kugelhahn austreten, an der auch der Betätigungsgriff 20 angeordnet ist. Die Einbautiefe des Kugelhahns wird so nicht verändert.

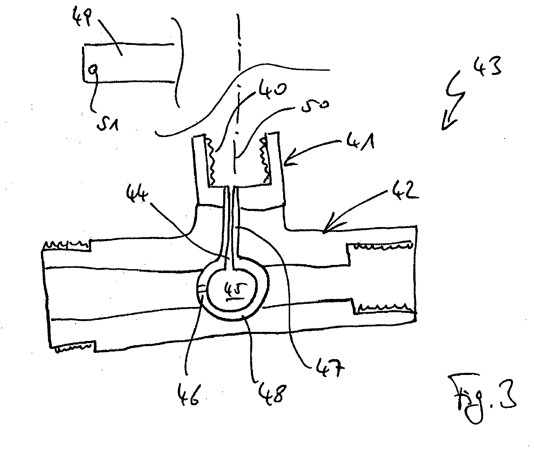

Die zweite Ausführungsform in Figur 3, ebenfalls mit einer Metall-Kunststoff-Lagerung, (nicht zeichnerisch dargestellt) zeigt schematisch und sehr stark vereinfacht ein Innengewinde 40 in einem Stutzen 41 des Gehäuses 42 des Kugelhahns 43.

Es versteht sich, dass es außerdem sinnvoll ist, den Zugriffskanal 44 in den Stellkanal 45 bzw. hin zur Weiterführungsöffnung 46 mit einem manuellen Stellgriff zu versehen, der den Betätiger 47 (hier eine Hohlwelle) und somit das Stellelement 48 verdreht. Am Stellgriff 49 (nur angedeutet), der um seine Achse 50 drehbar ist, ist eine Verplombungsöse 51 vorgesehen.

## Patentansprüche

1. Verfahren zum Befüllen einer Heizungsanlage mit Heizmedium und/oder zum Entnehmen von Heizmedium aus der Heizungsanlage, wobei das Heizmedium durch einen Betätiger (18; 47) eines Kugelhahns geführt wird,
bei welchem
mittels des Kugelhahns zum wahlweisen Öffnen, Schließen und/oder Steuern in einen Durchfluss des Heizmediums durch den Kugelhahn von einer stromaufwärtigen Zuleitung (14) durch einen Stellkanal (22; 45) zu einer stromabwärtigen Ableitung (16) eingegriffen wird,
bei welchem mittels eines Stellelements (12; 48) des Betätigers (18; 47) innerhalb einer Stellkammer zum eindeutigen Bewegen des Stellelements (12; 48) der Stellkanal (22; 45) vergrößert und verkleinert wird,
und bei welchem
in geöffnetem Zustand eines schließ- und öffenbaren Zugriffskanals (24; 44) des Kugelhahns der Stellkanal (22; 45) entlang des Betätigers (18; 47) zur Umgebung geöffnet wird,
***dadurch gekennzeichnet, dass***
mittels eines aus Metall gefertigten Außen- oder Innengewindes (40) des Kugelhahns bei bereits verbundener Zu- und Ableitung (14, 16) eine Zugriffsleitung dicht angeschlossen wird, sodass diese Zugriffsleitung bei geöffnetem Zugriffskanal (24; 44) eine Verbindung zum Stellkanal (22; 48) hat, um durch Öffnen eines an dem Betätiger (18; 47) angeordneten zusätzlichen Ventils (28) einen hinter der stromabwärtigen Ableitung (16) anbringbaren Rohrabschnitt zu entleeren.

2. Verfahren zum Befüllen einer Heizungsanlage mit Heizmedium und/oder zum Entnehmen von Heizmedium aus der Heizungsanlage, wobei das Heizmedium durch einen Betätiger (18; 47) eines Kugelhahns geführt wird, bei welchem mittels des Kugelhahns zum wahlweisen Öffnen, Schließen und/oder Steuern in einen Durchfluss des Heizmediums durch den Kugelhahn von einer stromaufwärtigen Zuleitung (14) durch einen Stellkanal (22; 45) zu einer stromabwärtigen Ableitung (16) eingegriffen wird, bei welchem mittels eines Stellelements (12; 48) des Betätigers (18; 47) innerhalb einer Stellkammer zum eindeutigen Bewegen des Stellelements (12; 48) der Stellkanal (22; 45) vergrößert und verkleinert wird, und bei welchem in geöffnetem Zustand eines schließ- und öffenbaren Zugriffskanals (24; 44) des Kugelhahns der Stellkanal (22; 45) entlang des Betätigers (18; 47) zur Umgebung geöffnet wird,
***dadurch gekennzeichnet, dass***
der Zugriffskanal (24; 44) mittels eines zwischen dem Zugriffskanal (24; 44) und einer Entleerungsöffnung (26) angeordneten zusätzlichen Ventils (28) geöffnet und geschlossen wird, wobei durch das Öffnen des zusätzlichen Ventils (28) der hinter der stromabwärtigen Ableitung (16) befindliche Rohrabschnitt entleert werden kann.

3. Verfahren zum Befüllen einer Heizungsanlage mit Heizmedium und/oder zum Entnehmen von Heizmedium aus der Heizungsanlage, wobei das Heizmedium durch einen Betätiger (18; 47) eines Kugelhahns geführt wird, bei welchem mittels des Kugelhahns zum wahlweisen Öffnen, Schließen und/oder Steuern in einen Durchfluss des Heizmediums durch den Kugelhahn von einer stromaufwärtigen Zuleitung (14) durch einen Stellkanal (22; 45) zu einer stromabwärtigen Ableitung (16) eingegriffen wird, bei welchem mittels eines Stellelements (12; 48) des Betätigers (18; 47) innerhalb einer Stellkammer zum eindeutigen Bewegen des Stellelements (12; 48) der Stellkanal (22; 45) vergrößert und verkleinert wird, und bei welchem in geöffnetem Zustand eines schließ- und öffenbaren Zugriffskanals (24; 44) des Kugelhahns der Stellkanal (22; 45) entlang des Betätigers (18; 47) zur Umgebung geöffnet wird,
***dadurch gekennzeichnet, dass***
der Zugriffskanal (24; 44) in einem Betätigungsschaft (18; 47) zum einen zum Befüllen und/oder Entleeren der Heizungsanlage genutzt wird und, dass zum anderen der Zugriffskanal (24; 44) in dem Betätigungsschaft (18; 47) zur Durchführung einer Messleitung genutzt wird, die einen im Stellkanal (22; 45) des Stellelements (12; 48) angeordneten Sensor zur Erfassung von Medienparametern mit einem externen Erfassungsgerät verbindet.

4. Verfahren nach einem der Ansprüche 1 bis 3, ***dadurch gekennzeichnet, dass*** eine auf einen Betätigungsschaft (18; 47) angeordnete Entleerungsöffhung (26) mittels eines Entleerungsventils (28) oder eines Entleerungshahns geöffnet und geschlossen wird.

5. Verfahren nach Anspruch 4, ***dadurch gekennzeichnet, dass*** im normalen Betrieb das Entleerungsventil (28) geschlossen wird.

6. Verfahren nach einem der Ansprüche 1 bis 3, ***dadurch gekennzeichnet, dass*** eine auf einen Betätigungsschaft (18; 47) angeordnete Entleerungsöffhung (26) mittels eines in dem Stellelement (12; 48) angeordneten weiteren Stellelements (12; 48), insbesondere Kükens (12), zur Bildung eines Entleerungshahns geöffnet und geschlossen wird.

7. Verfahren nach einem der Ansprüche 1 bis 6, ***dadurch gekennzeichnet, dass*** zum Verdrehen eines gefedert gelagerten Betätigungsgriffs (20; 49) dieser Betätigungsgriff (20; 49) zunächst gegen seine Vorspannfeder bewegt wird und erst dort verdreht wird.

8. Verfahren nach einem der Ansprüche 1 bis 7, ***dadurch gekennzeichnet, dass*** die Zu- oder die Ableitung (14, 16) durch den Zugriffskanal (24; 44) zur Umgebung geschlossen oder geöffnet werden.

9. Verfahren nach einem der Ansprüche 1 bis 8, ***dadurch gekennzeichnet, dass*** eine zur Zu- oder Ableitung (14, 16) gedrehte Weiterführungsöffnung (30; 46) gegenüber der jeweils anderen Leitung (14, 16) verschlossen wird, wobei jede der beiden Leitungen (14, 16) wahlweise ansteuerbar ist und wobei die Weiterführungsöffnung (30; 46) zu einer der beiden Leitungen (14, 16) geöffnet wird.

10. Verfahren nach einem der Ansprüche 1 bis 9, ***dadurch gekennzeichnet, dass*** eine zur Zu- oder Ableitung (14, 16) gedrehte Weiterführungsöffnung (30; 46) koaxial ausgerichtet wird, wenn der Stellkörper (12; 48) vollständig geschlossen ist, vor allem bei einer rechtwinkligen Verdrehung gegenüber einer Winkelposition mit maximalem Durchflussdurchmesser.

11. Verfahren nach einem der Ansprüche 1 bis 10, ***dadurch gekennzeichnet, dass*** mindestens eine zweite Weiterführungsöffnung (30; 46) an einer sphärischen Oberfläche des Stellelements (12; 48) vorgesehen ist, sodass bei Drehen des Stellelements (12; 48) in unterschiedliche Winkelpositionen der Zugriffskanal (24; 44) zum Stellkanal (22; 45) geöffnet bleibt, sich der Stellkanal (22; 45) aber durch unterschiedliche Weiterführungsöffnungen (30; 46) zur Zu- oder Ableitung (14, 16) oder zu beiden öffnet, indem bei den unterschiedlichen Winkelpositionen jeweils andere Weiterführungsöffnungen (30; 46) von der Lagerfläche des Stellelements (12; 48) geschlossen gehalten bzw. geöffnet werden.

## Claims

1. Method of filling a heating facility with heating medium and/or of removing heating medium from the heating facility, the heating medium being conducted through an actuator (18; 47) of a ball valve,
wherein
by means of the ball valve for selectively opening, closing and/or controlling, intervention in a flow of the heating medium through the ball valve from an upstream feed line (14) to a downstream drain line (16) through a regulating channel (22; 45) takes place,
wherein by means of an actuating element (12; 48) of the actuator (18; 47) within an actuating chamber for unambiguously moving the actuating element (12; 48), the regulating channel (22; 45) is enlarged and reduced in size, and wherein
in the open state of an access channel (24; 44) of the ball valve, which can be closed and opened, the regulating channel (22; 45) is opened towards the environment along the actuator (18; 47);
***characterized in* that**
by means of an exterior or interior thread (40) of the ball valve, made of metal, an access line is tightly attached with the feed and drain lines (14, 16) already connected, so that with the access channel (24; 44) open, this access line is connected to the regulating channel (22; 48) so as to evacuate a pipe section attachable to the rear of the downstream drain line (16) by opening an additional valve (28) arranged at the actuator (18; 47).

2. Method of filling a heating facility with heating medium and/or of removing heating medium from the heating facility, the heating medium being conducted through an actuator (18; 47) of a ball valve,
wherein
by means of the ball valve for selectively opening, closing and/or controlling, intervention in a flow of the heating medium through the ball valve from an upstream feed line (14) to a downstream drain line (16) through a regulating channel (22; 45) takes place,
wherein by means of an actuating element (12; 48) of the actuator (18; 47) within an actuating chamber for unambiguously moving the actuating element (12; 48), the regulating channel (22; 45) is enlarged and reduced in size, and wherein
in the open state of an access channel (24; 44) of the ball valve, which can be closed and opened, the regulating channel (22; 45) is opened towards the environment along the actuator (18; 47);
***characterized* in *that***
by means of an additional valve (28) arranged between the access channel (24; 44) and an evacuation opening (26), the access channel (24; 44) is opened and closed; wherein by opening of the additional valve (28), the pipe section located behind the downstream drain pipe (16) can be evacuated.

3. Method of filling a heating facility with heating medium and/or of removing heating medium from the heating facility, the heating medium being conducted through an actuator (18; 47) of a ball valve,
wherein
by means of the ball valve for selectively opening, closing and/or controlling, intervention in a flow of the heating medium through the ball valve from an upstream feed line (14) to a downstream drain line (16) through a regulating channel (22; 45) takes place,
wherein by means of an actuating element (12; 48) of the actuator (18; 47) within an actuating chamber for unambiguously moving the actuating element (12; 48), the regulating channel (22; 45) is enlarged and reduced in size, and wherein
in the open state of an access channel (24; 44) of the ball valve, which can be closed and opened, the regulating channel (22; 45) is opened towards the environment along the actuator (18; 47) ;
***characterized in that***
the access channel (24; 44) in an actuation shaft (18; 47) is used, on the one hand, for filling and/or emptying the heating facility and the access channel (24; 44) in the actuation shaft (18; 47) is used, on the other hand, for guiding through a measurement line connecting a sensor arranged in the regulating channel (22; 45) of the actuating element (12; 48) to an external detecting device in order to detect media parameters.

4. Method according to one of Claims 1 through 3, ***characterized in that*** an evacuation opening (26) arranged on an actuation shaft (18; 47) is opened and closed by means of an evacuation valve (28) or an evacuation cock.

5. Method according to Claim 4, ***characterized in that*** during normal operation, the evacuation valve (28) is closed.

6. Method according to one of Claims 1 through 3, ***characterized in that*** an evacuation opening (26) arranged on an actuation shaft (18; 47) is opened and closed by means of an additional actuating element (12; 48), in particular a plug (12), arranged in the actuating element (12; 48), for forming an evacuation cock.

7. Method according to one of Claims 1 through 6, ***characterized in that*** for rotating a spring-loaded actuation handle (20; 49), this actuation handle (20; 49) is first moved against its bias spring and is rotated only in this position.

8. Method according to one of Claims 1 through 7, ***characterized in that*** the feed line or the drain line (14, 16) are opened or closed towards the environment through the access channel (24; 44).

9. Method according to one of Claims 1 through 8, ***characterized in that*** a continuation opening (30; 46) rotated towards the feed line or the drain line (14, 16) is closed with respect to the corresponding other line (14, 16), where each of the two lines (14, 16) can be targeted selectively and the continuation opening (30; 46) is opened towards one of the two lines (14, 16).

10. Method according to one of Claims 1 through 9, ***characterized in that*** a continuation opening (30; 46) rotated towards the feed line or the drain line (14, 16) is oriented coaxially if the actuating element (12; 48) is completely closed, especially in case of an orthogonal rotation with respect to an angular position with maximum flow diameter.

11. Method according to one of Claims 1 through 10, ***characterized in that*** at least one second continuation opening (30; 46) is provided in a spherical surface of the actuating element (12; 48), such that with rotation of the actuating element (12; 48) in different angular positions, the access channel (24; 44) remains open towards the regulating channel (22; 45), but the regulating channel (22; 45) is opened towards the feed line or the drain line (14, 16) or towards both via different continuation openings (30; 46) by closing or opening, respectively, by means of the bearing surface of the actuating element (12; 48), different continuation openings (30; 46) in the various angular positions.

## Revendications

1. Procédé, destiné au remplissage d'une installation de chauffage avec un fluide chauffant et/ou au prélèvement de fluide chauffant à partir de l'installation de chauffage, le fluide chauffant étant conduit à travers un actionneur (18 ; 47) d'un robinet à boisseau sphérique,
lors duquel
au moyen du robinet à boisseau sphérique pour au choix, ouvrir, fermer et/ou commander, on intervient dans un débit du fluide chauffant à travers le robinet à boisseau sphérique d'un conduit d'alimentation (14) situé en amont, à travers un canal de réglage (22 ; 45) vers un conduit d'évacuation (16) situé en aval,
lors duquel, au moyen d'un élément de réglage (12 ; 48) de l'actionneur (18 ; 47) à l'intérieur d'une chambre de réglage, pour le déplacement univoque de l'élément de réglage (12 ; 48), on agrandit ou on rétrécit le canal de réglage (22 ; 45), et lors duquel
en position ouverte d'un canal d'accès (24 ; 44) susceptible de s'ouvrir et de se fermer du robinet à boisseau sphérique, le canal de réglage (22 ; 45) s'ouvre sur l'environnement le long de l'actionneur (18 ; 47),
**caractérisé en ce qu'**au moyen d'un filetage ou d'un taraudage (40) fabriqué en métal du robinet à boisseau sphérique, lorsque le conduit d'alimentation et le conduit d'évacuation (14, 16) sont déjà reliés, le conduit d'accès se raccorde de manière étanche, de sorte que lorsque le canal d'accès (24 ; 44) est ouvert, ledit conduit d'accès dispose d'une liaison sur le canal de réglage (22 ; 48) pour vidanger par ouverture d'une soupape (28) additionnelle placée sur l'actionneur (18 ; 47) un tronçon de tube susceptible d'être monté derrière le conduit d'évacuation (16) situé en aval.

2. Procédé, destiné au remplissage d'une installation de chauffage avec un fluide chauffant et/ou au prélèvement de fluide chauffant à partir de l'installation de chauffage, le fluide chauffant étant conduit à travers un actionneur (18 ; 47) d'un robinet à boisseau sphérique, lors duquel
au moyen du robinet à boisseau sphérique pour au choix, ouvrir, fermer et/ou commander, on intervient dans un débit du fluide chauffant à travers le robinet à boisseau sphérique d'un conduit d'alimentation (14) situé en amont, à travers un canal de réglage (22 ; 45) vers un conduit d'évacuation (16) situé en aval,
lors duquel, au moyen d'un élément de réglage (12 ; 48) de l'actionneur (18 ; 47) à l'intérieur d'une chambre de réglage, pour le déplacement univoque de l'élément de réglage (12 ; 48), on agrandit ou on rétrécit le canal de réglage (22 ; 45), et lors duquel en position ouverte d'un canal d'accès (24 ; 44) susceptible de s'ouvrir et de se fermer du robinet à boisseau sphérique, le canal de réglage (22 ; 45) s'ouvre sur l'environnement le long de l'actionneur (18 ; 47),
**caractérisé en ce que**
le canal d'accès (24 ; 44) s'ouvre et se ferme au moyen d'une soupape (28) additionnelle, placée entre le canal d'accès (24 ; 44) et un orifice de vidange (26), par l'ouverture de la soupape (28) additionnelle, le tronçon de tube placé derrière le conduit d'évacuation (16) situé en aval pouvant être vidangé.

3. Procédé, destiné au remplissage d'une installation de chauffage avec un fluide chauffant et/ou au prélèvement de fluide chauffant à partir de l'installation de chauffage, le fluide chauffant étant conduit à travers un actionneur (18 ; 47) d'un robinet à boisseau sphérique, au moyen du robinet à boisseau sphérique pour au choix, ouvrir, fermer et/ou commander, on intervient dans un débit du fluide chauffant à travers le robinet à boisseau sphérique d'un conduit d'alimentation (14) situé en amont, à travers un canal de réglage (22 ; 45) vers un conduit d'évacuation (16) situé en aval, lors duquel, au moyen d'un élément de réglage (12 ; 48) de l'actionneur (18 ; 47) à l'intérieur d'une chambre de réglage, pour le déplacement univoque de l'élément de réglage (12 ; 48), on agrandit ou on rétrécit le canal de réglage (22 ; 45), et lors duquel en position ouverte d'un canal d'accès (24 ; 44) susceptible de s'ouvrir et de se fermer du robinet à boisseau sphérique, le canal de réglage (22 ; 45) s'ouvre sur l'environnement le long de l'actionneur (18 ; 47),
**caractérisé en ce que**
d'une part, le canal d'accès (24 ; 44) est utilisé dans une tige d'actionnement (18 ; 47), pour remplir et/ou pour vidanger l'installation de chauffage et **en ce que** d'autre part, le canal d'accès (24 ; 44) est utilisé dans la tige d'actionnement (18 ; 47) pour faire passer un conduit de mesure qui relie un capteur placé dans le canal de réglage (22 ; 45) de l'élément de réglage (12 ; 48) destiné à détecter des paramètres du fluide avec un instrument de détection externe.

4. Procédé selon l'une quelconque des revendications 1 à 3, **caractérisé en ce qu'**un orifice de vidange (26) placé sur une tige d'actionnement (18 ; 47) s'ouvre et se ferme au moyen d'une soupape de vidange (28) ou d'un robinet de vidange.

5. Procédé selon la revendication 4, **caractérisé en ce qu'**en fonctionnement normal, la soupape de vidange (28) se ferme.

6. Procédé selon l'une quelconque des revendications 1 à 3, caractérisé en qu'un orifice de vidange (26) placé sur une tige d'actionnement (18 ; 47) s'ouvre et se ferme au moyen d'un élément de réglage (12 ; 48) additionnel, notamment d'un boisseau (12) placé dans l'élément de réglage (12 ; 48) pour créer un robinet de vidange.

7. Procédé selon l'une quelconque des revendications 1 à 6, **caractérisé en ce que** pour faire tourner une poignée d'actionnement (20 ; 49) logée sur ressort, on déplace d'abord ladite poignée d'actionnement (20 ; 49) contre son ressort de précontrainte, pour ne la faire tourner qu'à partir de là.

8. Procédé selon l'une quelconque des revendications 1 à 7, **caractérisé en ce que** le conduit d'alimentation ou le conduit d'évacuation (14, 16) s'ouvrent ou se ferment sur l'environnement via le canal d'accès (24 ; 44).

9. Procédé selon l'une quelconque des revendications 1 à 8, **caractérisé en ce qu'**un orifice de prolongement (30 ; 46) tourné vers le conduit d'alimentation ou le conduit d'évacuation (14, 16) se ferme par rapport à l'autre conduit (14, 16) respectif, chacun des deux conduits (14, 16) étant susceptible d'être activé au choix et l'orifice de prolongement (30 ; 46) s'ouvrant vers l'un des deux conduits (14, 16).

10. Procédé selon l'une quelconque des revendications 1 à 9, **caractérisé en ce qu'**un orifice de prolongement (30 ; 46) tourné vers le conduit d'alimentation ou le conduit d'évacuation (14, 16) est orienté de manière coaxiale, lorsque l'organe de réglage (12 ; 48) est totalement fermé, prioritairement lors d'une rotation à angle droit par rapport à une position angulaire à diamètre de débit maximal.

11. Procédé selon l'une quelconque des revendications 1 à 10, **caractérisé en ce qu'**au moins un deuxième orifice de prolongement (30 ; 46) est prévu sur une surface sphérique de l'élément de réglage (12 ; 48), de sorte que lors d'une rotation de l'élément de réglage (12 ; 48) dans différentes positions angulaires, le canal d'accès (24 ; 44) reste ouvert sur le canal de réglage (22 ; 45), mais que le canal de réglage (22 ; 45) s'ouvre à travers différents orifices de prolongement (30 ; 46) vers le conduit d'alimentation ou le conduit d'évacuation (14, 16) ou vers les deux, **en ce que** dans les différentes positions angulaires, chaque fois d'autres orifices de prolongement (30 ; 46) sont maintenus fermés ou sont ouverts par la surface de logement de l'élément de réglage (12 ; 48).
